# EUROPÄISCHE PATENTSCHRIFT

(11) **EP 3 172 164 B1**
(45) Veröffentlichungstag und Bekanntmachung des Hinweises auf die Patenterteilung: **11.11.2020**
(21) Anmeldenummer: 15756816.3
(22) Anmeldetag: 27.07.2015
(51) Int. Cl.: C01B 3/06, C01B 3/08, C01B 3/10, C01B 3/36, C01B 3/38

(54) **VERFAHREN ZUM HERSTELLEN VON WASSERSTOFF**
METHOD FOR PRODUCING HYDROGEN
PROCÉDÉ POUR LA PRÉPARATION D'HYDROGÈNE

(30) Priorität: 25.07.2014 AT 505262014
(43) Veröffentlichungstag der Anmeldung: 31.05.2017
(73) Patentinhaber: Rouge H2 Engineering GmbH, 8020 Graz (AT)
(72) Erfinder: NESTL, Stephan, 8670 Krieglach (AT); HACKER, Viktor, A-8042 Graz (AT); VOITIC, Gernot, A-8062 Kumberg (AT)
(74) Vertreter: KLIMENT & HENHAPEL
(86) Internationale Anmeldenummer: PCT/AT2015/050177
(87) Internationale Veröffentlichungsnummer: WO 2016/011473

(56) Entgegenhaltungen:
- EP-A2- 1 134 187
- WO-A1-2011/028133
- JP-A- 2005 206 459
- US-A1- 2007 217 972

## Beschreibung

Die vorliegende Erfindung betrifft ein Verfahren zum Herstellen von komprimiertem Wasserstoff.

Wasserstoff ist ein wichtiger Energieträger dessen Bedeutung in den letzten Jahren zugenommen hat, da bei der Verbrennung von Wasserstoff kaum Schadstoffe und keine Feinstaubpartikel anfallen. Eine derartig vorteilhafte Verbrennungsreaktion ist insbesondere bei Verbrennungsmotoren im Straßenverkehr wünschenswert. Zudem wird Wasserstoff in steigendem Maße zur Energiegewinnung in Brennstoffzellen eingesetzt. Derzeit wird der größte Teil des hergestellten Wasserstoffs jedoch in der chemischen Industrie eingesetzt.

Wasserstoff wird heutzutage vorwiegend mithilfe von Dampfreformierung, partieller Oxidation und autothermer Reformierung hergestellt. In diesen Verfahren wird ein CO reiches Synthesegas produziert, so dass diese Verfahren oft mit der Wassergas-Shift-Reaktion kombiniert werden, um ein Gemisch aus Wasserstoff und Kohlendioxid herzustellen. Wird eine partielle Oxidation und autotherme Reformierung verwendet, wird zusätzlich Luft eingesetzt und der produzierte Wasserstoff ist zusätzlich mit großen Mengen and Stickstoff aus der Luft verdünnt. Um diesen zugesetzten Stickstoff, CO₂, nicht umgesetztes CO und Ausgangsmaterial vom hergestellten Wasserstoff zu trennen, sind zusätzliche Reinigungsschritte notwendig. Diese Reinigung erfolgt üblicherweise durch Druckwechsel-Adsorption oder Monoethanolamin Gaswäsche.

Die GB 902,338 beschreibt Verfahren und Vorrichtungen zur Herstellung von komprimiertem Wasserstoff. Dabei wird Dampf mit Eisenpartikel in Kontakt gebracht, wodurch einerseits Wasserstoff andererseits Eisenoxid gebildet wird. Das gebildete Eisenoxid wird in einem weiteren Schritt zu Eisen reduziert und in den Wasserstoffherstellungsschritt rückgeführt.

US2007/0217972 A1 beschreibt eine andere Vorrichtung und das entsprechende Verfahren zur Herstellung von komprimiertem Wasserstoff.

DE 279726 aus dem Jahre 1913 beschreibt ein Verfahren zur Herstellung von Wasserstoff, bei dem überhitzter Wasserdampf über erhitzte Metalle geleitet wird. Die Retorte, in der dieses Verfahren durchgeführt wird, weist eine Öffnung zum Abführen des Wasserstoffs auf, an der eine mit Ventilen versehene Rohrleitung angeordnet ist.

In der US 3,880,987 wird ein Verfahren zur Herstellung von komprimiertem Wasserstoff geoffenbart, bei dem Wasserdampf mit metallischem Zinn und Zinnoxid in Kontakt gebracht wird.

Die DE 2507612 beschreibt ein Verfahren zur Herstellung von Wasserstoff, bei dem als Katalysator Wolframdioxid verwendet wird. Im Zuge dieses Verfahrens wird Wasserdampf bei einer Temperatur von weniger als 700 °C mit dem Katalysator in Kontakt gebracht.

Weitere Verfahren zur Herstellung von Wasserstoff umfassen die Verwendung von Membranreaktoren, Elektrolyse oder "Chemical looping"-Reaktionen.

Sämtliche aus dem Stand der Technik bekannte Verfahren zur Herstellung von Wasserstoff weisen Nachteile unterschiedlicher Art auf. Einerseits wird mit diesen Verfahren mit Stickstoff, CO₂, nicht umgesetztes CO und Ausgangsmaterial verunreinigter Wasserstoff hergestellt. Um diesen Wasserstoff zu reinigen benötigt man zusätzliche Verfahren und Vorrichtungen, wodurch die Herstellung von Wasserstoff mit diesen Verfahren zeit- und kostenintensiv ist. Mit Hilfe von Elektrolyse würde es zwar möglich sein, reinen Wasserstoff herzustellen, jedoch ist diese Art der Herstellung nur bei Verfügbarkeit von günstigen Stromquellen wirtschaftlich. Andererseits ist der mit diesen Verfahren hergestellte Wasserstoff üblicherweise nicht komprimiert. D.h. um komprimierten Wasserstoff herstellen zu können, wird zusätzlich eine Vorrichtung zum Komprimieren von Wasserstoff benötigt.

Die Lagerung und der Transport von Wasserstoff stellt ein weiteres Problem dar. Üblicherweise wird Wasserstoff in Druckbehältern gelagert. Durch Verdichten mit Kompressoren und optionaler Kühlung kann Wasserstoff in verdichteter oder flüssiger Form in Druckbehältern eingebracht und eingelagert werden. Wesentliches Problem bei der Verflüssigung und Verdichtung von Wasserstoff ist der hohe Energieaufwand sowie der apparative Aufwand. Zusätzlich birgt diese Art der Lagerung das Risiko, dass die Behälter bzw. die daran angebrachten Ventile durch den hohen inneren Druck bersten können. Alternative Formen der Speicherung von Wasserstoff basieren auf Feststoffen oder Flüssigkeiten (z.B. Metallhydrid- und Adsorptionsspeicherung).

Aufgabe der vorliegenden Erfindung ist es, u.a., ein alternatives Verfahren bzw. eine Vorrichtung zur Herstellung von komprimiertem Wasserstoff bereitzustellen, welches bzw. welche die Nachteile des Standes der Technik überwindet.

Die vorliegende Erfindung betrifft eine Vorrichtung zum Herstellen von komprimiertem Wasserstoff umfassend einen druckstabilen Reaktor mit einem Reaktorraum, der eine metallhaltige Kontaktmasse aufweist, wobei der Reaktor mindestens eine Zuführleitung zum Zuführen von Fluiden in den Reaktorraum und mindestens eine Abführleitung zum Abführen von Fluiden aus dem Reaktorraum umfasst, wobei die mindestens eine Abführleitung mit einer Vorrichtung zur Steuerung oder Regelung der Durchflussmenge, vorzugsweise mit einem Ventil, zur Einstellung des Drucks innerhalb des Reaktorraums versehen ist, wobei an mindestens einer Zuführleitung ein Fördermittel zum Einbringen eines wasserhaltigen Mediums in einen Reaktorraum vorgesehen ist und wobei mindestens eine Abführleitung in den Reaktorraum ragt, über die komprimierter Wasserstoff aus dem Reaktorraum abgeführt wird, wobei der Reaktorraum mindestens zwei voneinander getrennte und gasleitend miteinander verbundene Bereiche aufweist, von denen mindestens ein Bereich die metallhaltige Kontaktmasse und mindestens ein weiterer Bereich mindestens ein inertes Material umfasst, wobei die in den Reaktorraum ragende Abführleitung in den Bereich umfassend das inerte Material mündet, und wobei im Reaktorraum mindestens ein Synthesegasbereich (8) angeordnet ist, der einen Katalysator und/oder einen nicht katalytischen Feststoff umfasst.

Ein weiterer Aspekt der vorliegenden Erfindung betrifft ein Verfahren zum Herstellen von komprimiertem Wasserstoff in einer erfindungsgemäßen Vorrichtung umfassend einen Schritt des Einbringens eines wasserhaltigen Mediums in einen Reaktorraum eines druckstabilen Reaktors dieser Vorrichtung mittels eines Fördermittels, vorzugsweise einer Pumpe, wobei der Reaktorraum eine metallhaltige Kontaktmasse umfasst, wobei vor oder im Reaktorraum das wasserhaltige Medium verdampft wird, wodurch der Druck innerhalb des Reaktorraumes über den Umgebungsdruck steigt, und das verdampfte Wasser mit dem Metall der Kontaktmasse zu Wasserstoff und das Metall zu Metalloxid umgesetzt wird, wobei der komprimierte Wasserstoff über eine in den Reaktorraum ragende aus dem Reaktorraum abgeführt wird, wobei der Druck innerhalb des Reaktorraums mit einer an der Abführleitung vorgesehenen Vorrichtung zur Steuerung oder Regelung der Durchflussmenge, vorzugsweise mit einem Ventil, gesteuert oder geregelt wird, wobei die in den Reaktorraum ragende Leitung in den Bereich umfassend das inerte Material ragt und der komprimierte Wasserstoff über den Bereich umfassend das inerte Material aus dem Reaktorraum abgeführt wird, und wobei das Verfahren umfassend einen vom ersten Schritt der Umsetzung von verdampften Wasser mit dem Metall der Kontaktmasse zu Wasserstoff und des Metalls zu Metalloxid unabhängigen zweiten Schritt, in dem das Metalloxid der metallhaltigen Kontaktmasse aus dem ersten Schritt mit einem Gasgemisch umfassend Kohlenmonoxid und/oder Wasserstoff und/oder Methan und/oder langkettigen Kohlenwasserstoffe zu Metall reduziert wird.

Die im erfindungsgemäßen Verfahren eingesetzten Reaktoren ermöglichen die Herstellung von komprimiertem Wasserstoff ohne die Verwendung von Kompressoren, die den üblicherweise bei Normaldruck hergestellten Wasserstoff, komprimieren. Erfindungsgemäß wird ein wasserhaltiges Medium (Wasser bzw. Wasserdampf) mit einer metallhaltigen Kontaktmasse in Kontakt gebracht. Durch die Oxidation des Metalls in der metallhaltigen Kontaktmasse bei einer Temperatur von vorzugsweise 300°C bis 1200°C, noch mehr bevorzugt 400°C bis 1000°C, besonders bevorzugt von 450°C bis 950°C, wird Wasserstoff freigesetzt. Die Vorrichtungen zur Steuerung oder Regelung der Durchflussmenge an den am Reaktor befindlichen Öffnungen ermöglichen es, dass der Druck innerhalb des Reaktors bedingt durch das Verdampfen des Wassers im Reaktorraum steigt. Der gebildete Wasserstoff liegt somit ebenfalls unter diesem Druck vor. Wird ein Fördermittel (z.B. Pumpe) zum Einbringen eines wasserhaltigen Mediums in den Reaktor verwendet, muss dieses durch Fördern des Mediums den Druck aufrecht halten und einen entsprechenden Gegendruck aufbauen. Wird ein bestimmter Druck innerhalb des Reaktorraums erreicht, kann mit einer Vorrichtung zur Steuerung oder Regelung der Durchflussmenge, vorzugsweise mit einem Ventil, der Reaktorraum im Bereich des Fördermittels geschlossen werden. Dadurch kann der im Zuge des Verfahrens innerhalb des Reaktors gebildete Druck aufrechterhalten und komprimierter Wasserstoff zu einem späteren Zeitpunkt aus dem Reaktor entnommen werden. Zudem kann mit der erfindungsgemäßen Vorrichtung zunächst eine bestimmte Menge Wasser oder Wasserdampf in den Reaktor eingebracht und dieser anschließend verschlossen werden. Durch die Zuführung von Wärme steigt der Druck innerhalb des Reaktorraums dementsprechend an. Im Gegensatz dazu wird bei den aus dem Stand der Technik bekannten Verfahren zur Wasserstoffherstellung der Druck in den entsprechenden Reaktoren dadurch erzeugt, in dem der Wasserdampf mit hohem Druck mit einer geeigneten Kontaktmasse in Kontakt gebracht wird. D.h. der Druckaufbau in solchen Systemen erfolgt durch das Einbringen des Dampfes mittels Drucks (siehe z.B. GB 902,338). Dadurch sind weitere technische Maßnahmen bei der Wasserstoffherstellung notwendig.

Wird ein gewünschter Druck erreicht, wird beispielsweise das Ventil an einer Abführleitung geöffnet, wodurch Wasserstoff unter definiertem Druck abgelassen werden kann. Nach dem sich innerhalb des Reaktors ein gewünschter Druck aufgebaut hat, kann komprimierter Wasserstoff somit über eine mit einer Vorrichtung zur Steuerung oder Regelung der Durchflussmenge (z.B. Ventil) versehenen Leitung vom Reaktor direkt abgeführt werden. Das Abführen des komprimierten Wasserstoffs kann kontinuierlich erfolgen, in dem gleichzeitig zum Abführen, mit dem Fördermittel Wasser in den Reaktor eingebracht wird. Durch die Vorrichtung zur Steuerung oder Regelung der Durchflussmenge an der Abführöffnung kann die abgeführte Menge an komprimierten Wasserstoff bestimmt werden. Dadurch wird auch der Druck innerhalb des Reaktors gesteuert bzw. geregelt.

Das Metall der metallhaltigen Kontaktmasse ist ein Metall, welches durch Wasserstoff, Kohlenmonoxid oder gasförmige Kohlenwasserstoffe unter den gegebenen Temperaturen zumindest teilweise reduziert, sowie mit Dampf unter Bildung von Wasserstoff zumindest teilweise oxidiert werden kann. Derartige Metalle sind dem Fachmann hinreichend bekannt, wobei Eisen, Wolfram, Molybdän und Germanium besonders geeignet sind.

"Zumindest teilweise reduziert" bzw. "zumindest teilweise oxidiert", wie hierin verwendet, bedeutet, dass das Metall bzw. Metalloxid entweder vollständig oxidiert bzw. reduziert wird oder nur teilweise. Ein Beispiel für eine teilweise Reduktion ist z.B. die Reduktion von Fe₃O₄ zu FeO.

Gemäß einer bevorzugten Ausführungsform der vorliegenden Erfindung wird der Druck innerhalb des Reaktorraums durch das Fördermittel und einer oder mehreren Vorrichtungen zur Steuerung der Durchflussmenge in Leitungen, die in und aus dem Reaktorraum führen, gesteuert.

Der Druck innerhalb des Reaktorraums wird vorzugsweise durch das Fördermittel, mit dem das wasserhaltige Medium in den Reaktor eingebracht wird, gesteuert bzw. geregelt. Um einen entsprechenden Gegendruck im Reaktor zu erzeugen, wodurch der Druck innerhalb desselbigen über den Umgebungsdruck gesteigert werden kann, befinden sich an den Leitungen, die in und aus dem Reaktorraum führen, Vorrichtungen zur Steuerung bzw. Regelung der Durchflussmenge in diesen Leitungen. Vorrichtungen zur Steuerung der Durchflussmenge sind vorzugsweise Ventile. Besonders bevorzugt sind Sperrventile, Stromventile, Rückschlagventile, Druckventile und/oder Wegeventile.

Gemäß einer weiteren bevorzugten Ausführungsform der vorliegenden Erfindung beträgt der Druck bei der Umsetzung von verdampften Wasser mit dem Metall der Kontaktmasse zu Wasserstoff und des Metalls bzw. der Metalle zu Metalloxid mindestens 2 bar, vorzugsweise von mindestens 3 bar, vorzugsweise von mindestens 4 bar, vorzugsweise von mindestens 5 bar, noch mehr bevorzugt von mindestens 6 bar, noch mehr bevorzugt von mindestens 7 bar, noch mehr bevorzugt von mindestens 8 bar, noch mehr bevorzugt von mindestens 9 bar, insbesondere von mindestens 10, 15, 20, 25, 30, 40, 50, 60, 70, 80, 90, 100, 150, 200, 250 oder 300 bar, beträgt. Besonders bevorzugt beträgt oder steigt der Druck während der Umsetzung bis auf maximal 400, 350, 300, 250, 200, 150, 100, 90, 80, 70, 60 oder 50 bar, abhängig von der Druckbeständigkeit des eingesetzten Reaktors, der Leitungen und den Anschlüssen zu den Vorrichtungen zur Steuerung der Durchflussmenge. Zudem beträgt der Druck während der Umsetzung bevorzugt zwischen 2 und 400 bar, zwischen 2 und 350 bar, zwischen 2 und 300 bar, zwischen 2 und 250 bar, zwischen 2 und 200 bar, zwischen 2 und 150 bar, zwischen 2 und 100 bar, zwischen 2 und 80 bar, zwischen 2 und 60 bar, zwischen 5 und 400 bar, zwischen 5 und 400 bar, zwischen 5 und 400 bar, zwischen 5 und 350 bar, zwischen 5 und 300 bar, zwischen 5 und 250 bar, zwischen 5 und 200 bar, zwischen 5 und 150 bar, zwischen 5 und 100 bar, zwischen 5 und 80 bar oder zwischen 5 und 60 bar. Besonders bevorzugt ist ein Druckbereich zwischen 2 und 250 bar, noch mehr bevorzugt zwischen 5 und 200 bar.

Die metallhaltige Kontaktmasse weist vorzugsweise die Form eines Metallschwamms, Pellets, Pulvers, Granulats oder eine Kombination davon auf. Verfahren zur Herstellung derartiger Kontaktmassen sind dem Fachmann hinreichend bekannt. Die metallhaltige Kontaktmasse, die mit dem Wasser des wasserhaltigen Mediums bzw. dem Wasserdampf in Kontakt gebracht wird, kann im Prinzip jegliche Form aufweisen. Besonders bevorzugt sind Kontaktmassen, die mechanisch stabil sind und für die Umsetzung von Wasser zu Wasserstoff geeignet große Oberfläche aufweisen.

Gemäß einer bevorzugten Ausführungsform der vorliegenden Erfindung umfasst die metallhaltige Kontaktmasse ein Metall und/oder Metalloxid ausgewählt aus der Gruppe bestehend aus Eisen, Eisenoxid, Molybdän, Molybdänoxid, Wolfram, Wolframoxid, Germanium, Germaniumoxid und Kombinationen davon. Besonders bevorzugt ist die Verwendung von Eisen bzw. Eisenoxid in der metallhaltigen Kontaktmasse.

Die erfindungsgemäß verwendete metallhaltige Kontaktmasse kann die zuvor erwähnten Metalle bzw. Metalloxide in beliebiger Menge und in beliebigen Mengenverhältnissen umfassen.

Gemäß einer bevorzugten Ausführungsform der vorliegenden Erfindung umfasst die Kontaktmasse zusätzliche Metalloxide, um die Stabilität und Reaktivität der Kontaktmasse zu erhöhen. Geeignete zusätzliche Metalloxide sind vorzugsweise ausgewählt aus der Gruppe bestehend aus CoO, GeO₂, CuO, NiO₂, PtO₂, Na₂O, In₂O₃, Li₂O, WO₃, Ag₂O, ZnO, RuO, NiO, Fe₂O₃, RuO₂, Ga₂O₃, PtO, Nb₂O₅, MnO₂, In₂O₃, PdO, K₂O, SnO₂, TiO₂, Cr₂O₃, HfO, ZrO₂, VO₂, CeO₂, Y₂O₃, CaO, MoO₂, SiO₂, La₂O₃, MgO, Sc₂O₃, SrO, Al₂O₃ und Kombinationen davon. Vorzugsweise ist der Anteil der aktiven Metalle (wie Eisen, Molybdän, Wolfram und Germanium) in der metallhaltigen Kontaktmasse höher als jener der nicht-reaktiven Zusatzstoffe bzw. Metalloxide (wie z.B. Al₂O₃ und ZrO₂). Dementsprechend umfasst die metallhaltige Kontaktmasse mindestens 60%, vorzugsweise mindestens 70%, vorzugsweise mindestens 80%, vorzugsweise mindestens 90%, vorzugsweise mindestens 95%, noch mehr bevorzugt mindestens 99%, aktive Metalle. "Aktiv" in diesem Zusammenhang bedeutet, dass das Material/Metall durch Wasserstoff, Kohlenmonoxid oder gasförmige Kohlenwasserstoffe unter den gegebenen Temperaturen zumindest teilweise reduziert, sowie mit Dampf unter Bildung von Wasserstoff zumindest teilweise oxidiert werden kann.

Gemäß der vorliegenden Erfindung weist der Reaktorraum mindestens zwei voneinander getrennte und gasleitend miteinander verbundene Bereiche auf, von denen mindestens ein Bereich die metallhaltige Kontaktmasse und mindestens ein weiterer Bereich mindestens ein inertes Material umfasst.

Die in den Reaktorraum ragende Leitung ragt in den Bereich umfassend das inerte Material und der komprimierte Wasserstoff wird über den Bereich umfassend das inerte Material aus dem Reaktorraum abgeführt. Dadurch wird es ermöglicht, dass der aus dem Reaktorraum gewonnene Wasserstoff weniger Verunreinigungen aufweist, als herkömmlich hergestellter Wasserstoff.

Die im Reaktorraum der erfindungsgemäßen Vorrichtung befindliche Kontaktmasse verbleibt während des gesamten Verfahrens und während dessen Reduktion nach der Wasserstoffherstellung im erfindungsgemäßen Reaktor. Dies hat den Vorteil, dass die Kontaktmasse nicht in einen Regenerationsreaktor überführt und somit bewegt werden muss. Der Bereich des Reaktorraums, der die Kontaktmasse umfasst, ist somit als Festbettreaktor anzusehen. Die Tatsache, dass sowohl Oxidation als auch Reduktion der Kontaktmasse in ein und denselben Reaktorraum durchgeführt wird, hat somit Vorteile gegenüber herkömmlichen Vorrichtungen wie in der GB 902,338 beschrieben.

Im erfindungsgemäßen Verfahren wird aus Wasserdampf bzw. Wasser Wasserstoff gewonnen. Überschüssiges Wasser wird vorzugsweise vom hergestellten komprimierten Wasserstoff abgetrennt, in dem der vom Reaktor abgeführte komprimierte Wasserstoff einem Wasserdampfabscheider zugeführt wird. Durch diesen Verfahrensschritt wird vorzugsweise zumindest 10%, noch mehr bevorzugt mindestens 20%, noch mehr bevorzugt mindestens 30%, noch mehr bevorzugt mindestens 40%, noch mehr bevorzugt mindestens 50%, noch mehr bevorzugt mindestens 60%, noch mehr bevorzugt mindestens 70%, noch mehr bevorzugt mindestens 80%, noch mehr bevorzugt mindestens 90%, noch mehr bevorzugt mindestens 95%, insbesondere 100%, des Wassers des im aus dem Reaktor austretenden Wasserstoff/Wassergemisches entfernt. Die Wasserdampfabscheidung beruht gemäß einer bevorzugten Ausführungsform der vorliegenden Erfindung auf einem Kondensator.

Das erfindungsgemäße Verfahren umfasst einen ersten Schritt bei dem Wasser in Anwesenheit von Metall zu Wasserstoff und das Metall zu einem Metalloxid umgesetzt wird. Um das Metalloxid aus diesem ersten Schritt zu Metall zu reduzieren und somit die metallhaltige Kontaktmasse zu "regenerieren", wird ein weiterer Verfahrensschritt durchgeführt. Dadurch wird das in einem ersten Schritt entstandene Metalloxid regeneriert bzw. reduziert. Der Schritt des "Regenerierens" erfolgt erfindungsgemäß im Reaktorraum der erfindungsgemäßen Vorrichtung, wodurch es nicht erforderlich ist die zu regenerierende Kontaktmasse aus dem Reaktor zu entfernen. Bei herkömmlichen Verfahren, wie z.B. in der GB 902,338 beschrieben, wird hingegen die Kontaktmasse aus dem Reaktor entfernt, regeneriert und anschließend wieder in den Reaktorraum eingebracht. Daher ist für diese Art der Regeneration der Kontaktmasse ein gesonderter Reaktor vonnöten.

Gemäß einer weiteren bevorzugten Ausführungsform der vorliegenden Erfindung umfasst das erfindungsgemäße Verfahren einen vom ersten Schritt der Umsetzung von verdampften Wasser mit dem Metall der Kontaktmasse zu Wasserstoff und des Metalls zu Metalloxid unabhängigen zweiten Schritt, in dem das Metalloxid der metallhaltigen Kontaktmasse aus dem ersten Schritt mit einem Gasgemisch umfassend Kohlenmonoxid und/oder Wasserstoff und/oder Methan und/oder langkettigen Kohlenwasserstoffe zumindest teilweise zu Metall reduziert wird. Derartige Gasgemische entstehen z.B. bei der Herstellung von Synthesegas aus Erdölfraktionen wie Diesel wie unten beschrieben. "Langkettige Kohlenwasserstoffe", wie hierin verwendet, umfassen Kohlenwasserstoffe mit mehr als einem Kohlenstoffatom, vorzugsweise mit einer Kettenlänge von mehr als 2, 3, 4 oder 5 Kohlenstoffatomen. Geeignete Gasgemische können auch Alkohole von Kohlenwasserstoffen umfassen (wie z.B. Methanol oder Ethanol).

Die Oxidationsreaktion kann abwechselnd zur Reduktionsreaktion im selben Reaktor durchgeführt werden. Dadurch kann der Prozess der Herstellung von komprimiertem Wasserstoff kontinuierlich erfolgen, wenn in mindestens zwei Reaktoren versetzt zueinander das erfindungsgemäße Verfahren durchgeführt wird. Abwechselnd findet in jedem der Reaktoren ein Reduktions- und ein Oxidationsschritt statt. Im Anschluss des jeweiligen Reaktionsschritts wird der andere Reaktionsschritt durchgeführt.

Gemäß einer bevorzugten Ausführungsform der vorliegenden Erfindung wird das Gasgemisch umfassend Kohlenmonoxid und Wasserstoff in einem vorzugsweise innerhalb des Reaktorraumes befindlichen Synthesegasbereichs, der einen Katalysator und/oder einen nicht-katalytischen Feststoff umfasst, aus einem vergasbaren kohlenstoffhaltigen Ausgangsmaterial hergestellt und in den Bereich umfassend die zumindest teilweise oxidierte metallhaltige Kontaktmasse geleitet.

Erfindungsgemäß kann jegliche Quelle für ein Gasgemisch umfassend Kohlenmonoxid und/oder Wasserstoff und/oder Methan und/oder langkettigen Kohlenwasserstoffe eingesetzt werden, um das oxidierte Metall der metallischen Kontaktmasse bzw. die Metalloxide zumindest teilweise zu reduzieren. Es ist jedoch besonders bevorzugt, wenn das Gasgemisch umfassend Kohlenmonoxid und Wasserstoff bzw. das Synthesegas direkt im Reaktor selbst hergestellt wird. Dadurch könnten vergasbare kohlenstoffhaltige Ausgangsmaterialien direkt in den Reaktor eingesetzt werden, wodurch ein zusätzlicher Synthesegasreaktor eingespart werden kann.

Als "vergasbare kohlenstoffhaltige Ausgangsmaterialien" können sämtliche für die Herstellung von Synthesegas bekannten Stoffe und Stoffgemische verwendet werden, die entweder fest, flüssig oder gasförmig sind. Feste vergasbare Ausgangsmaterialen können beispielsweise Kohle oder Biomasse, wie Holz oder Stroh, sein. Als flüssige Edukte für Synthesegas können Rohöldestillate (leichtsiedende und/oder hochsiedende Fraktionen), aber auch Alkohole (wie z.B. Methanol, Ethanol oder Propanol) eingesetzt werden. Gasförmige Ausgangsmaterialien umfassen u.a. Methan, Biogas, Erdgas und/oder Flüssiggas. Zu diesen Ausgangsmaterialien werden im Bedarfsfall zusätzlich Oxidationsmittel (z.B. Luft und/oder Sauerstoff und/oder Wasserdampf und/oder Kohlendioxid) dazugegeben.

Der Synthesegasbereich innerhalb des erfindungsgemäßen Reaktors umfasst vorzugsweise einen Katalysator, der vorzugsweise ausgewählt ist aus der Gruppe bestehend aus Metallen, Metalloxiden und Kombinationen davon, insbesondere Nickel, Kobalt, Ruthenium, Platin, Palladium, Gold, Eisen, MgO, Al₂O₃, SiO₂, CuO oder CeO₂. Selbstverständlich können im erfindungsgemäßen Verfahren jegliche Art und Form von Katalysatoren eingesetzt werden, die üblicherweise bei der Herstellung von Synthesegas verwendet werden.

Wird im erfindungsgemäßen Verfahren ein nicht-katalytischer Feststoff im Synthesegasbereich eingesetzt so ist dieser vorzugsweise ausgewählt aus der Gruppe bestehend aus Nickeloxid, Eisenoxid, Kupferoxid, Wolframoxid und Kombinationen davon. Der nicht-katalytische Feststoff muss nicht mit Wasserdampf zu Metalloxid und Wasserstoff reagieren können. Daher sind auch z.B. Nickel und Kupfer möglich. Der nicht-katalytische Feststoff soll mit Luft, z.B., wieder zu seinem Oxid oxidiert werden können (Regenerationsschritt analog zur Dampfoxidation von z.B. Eisen im Reaktorbereich, der die metallhaltige Kontaktmasse umfasst).

Um die Energieeffizienz des erfindungsgemäßen Verfahrens zu verbessern ist es besonders bevorzugt, das im zweiten Schritt, dem "Reduktionsschritt" (Reduktion des oxidierten Metalls der metallhaltigen Kontaktmasse), entstehende Gasgemisch ("Abgas") aus dem Reaktor abzuführen und zur Temperierung des Reaktors und/oder des in den Reaktor einzubringenden kohlenstoffhaltigen Ausgangsmaterial zu verwenden. Dabei kann einerseits die Abwärme des aus dem Reaktor abgeführten Gasgemisches verwendet werden oder das Gasgemisch ("Abgas") selbst wird zur Wärmegewinnung verbrannt.

Gemäß einer besonders bevorzugten Ausführungsform der vorliegenden Erfindung wird das Gasgemisch umfassend Kohlenmonoxid und Wasserstoff in einem innerhalb des Reaktorraumes befindlichen Bereichs zur partiellen Oxidation eines kohlenstoffhaltigen Ausgangsmaterials, der gegebenenfalls einen Katalysator für die partielle Oxidation umfasst, aus einem kohlenstoffhaltigen Ausgangsmaterial hergestellt und in den Bereich umfassend die zumindest teilweise oxidierte metallhaltige Kontaktmasse geleitet.

Der Katalysator für die partielle Oxidation ist vorzugsweise ausgewählt aus der Gruppe bestehend aus Metallen, Metalloxiden und Kombinationen davon, insbesondere Nickel, Kobalt, Ruthenium, Platin, Palladium, Gold, Eisen, MgO, Al₂O₃, SiO₂, CuO oder CeO₂.

Bei der partiellen Oxidation wird ein unterstöchiometrisches Brennstoff-Luft-Gemisch in Anwesenheit eines Katalysators teilweise verbrannt, wobei ein wasserstoffreiches Synthesegas entsteht. Um die Bildung von elementarem Kohlenstoff zu reduzieren bzw. zu unterbinden wird bei der partiellen Oxidation vorzugsweise Wasser und/oder Wasserdampf beigemischt.

Gemäß einer bevorzugten Ausführungsform der vorliegenden Erfindung wird die partielle Oxidation in mindestens einem Reaktionsbereich, vorzugsweise einer Leitung, im Reaktorraum durchgeführt, wobei der mindestens eine Reaktionsbereich durch den Bereich umfassend die metallhaltige Kontaktmasse geführt wird, um die bei der partiellen Oxidation entstehende Wärme zur Erwärmung der metallhaltigen Kontaktmasse zu nutzen. Durch diese Vorgehensweise wird die Energieeffizienz des erfindungsgemäßen Verfahrens signifikant gesteigert, da die Wärme, die für die Reduktion der metallhaltigen Kontaktmasse benötigt wird, nicht am isolierten und druckverstärkten Außenmantel des Reaktors eingebracht werden muss, sondern im Inneren des Reaktors. Besonders vorteilhaft ist es, wenn mehrere Reaktionsbereiche für die partielle Oxidation, vorzugsweise mehrere Leitungen, die metallhaltige Kontaktmasse durchdringen.

Gemäß einer bevorzugten Ausführungsform der vorliegenden Erfindung wird der Synthesegasbereich oder der Bereich zur partiellen Oxidation eines kohlenstoffhaltigen Ausgangsmaterials von der metallhaltigen Kontaktmasse durch einen gasdurchlässigen inerten Bereich getrennt. Dadurch wird im erfindungsgemäßen Verfahren das im Synthesegasbereich oder im Bereich der partiellen Oxidation gebildete Gas bzw. Gasgemisch zunächst vorzugsweise in einen inerten Bereich innerhalb des Reaktorraums und anschließend zur metallhaltigen Kontaktmasse geführt. Diese Gasführung hat den Vorteil, dass eventuell bei der Herstellung des Synthesegases bzw. bei der partiellen Oxidation entstehender fester Kohlenstoff oder auch sonstige Verunreinigungen (z.B. Schwefelverbindungen) nicht in den Bereich der metallhaltigen Kontaktmasse gelangen, wodurch die Effizienz der Wasserstoffherstellung durch etwaige Verunreinigungen im Wesentlichen unbeeinträchtigt bleibt und die Reinheit des Wasserstoffes erhöht werden kann.

Gemäß einer weiteren bevorzugten Ausführungsform der vorliegenden Erfindung wird der komprimierte Wasserstoff aus dem inerten Bereich zwischen dem Synthesegasbereich oder dem Bereich zur partiellen Oxidation eines kohlenstoffhaltigen Ausgangsmaterials aus dem Reaktorraum abgeführt. Durch das Abführen des komprimierten Wasserstoffs aus dem zuvor genannten inerten Bereichs aus dem Reaktorraum ist es möglich hochreinen komprimierten Wasserstoff herzustellen.

Gemäß einer bevorzugten Ausführungsform der vorliegenden Erfindung weist die metallhaltige Kontaktmasse der erfindungsgemäßen Vorrichtung die Form eines Metallschwamms, Pellets, Pulvers, Granulats oder eine Kombination davon auf.

Gemäß einer weiteren bevorzugten Ausführungsform der vorliegenden Erfindung umfasst die metallhaltige Kontaktmasse ein Metall und/oder Metalloxid ausgewählt aus der Gruppe bestehend aus Eisen, Eisenoxid, Molybdän, Molybdänoxid, Wolfram, Wolframoxid, Germanium, Germaniumoxid und Kombinationen davon.

Um die Stabilität und Reaktivität der Kontaktmasse zu erhöhen umfasst die Kontaktmasse vorzugsweise zusätzliche Metalloxide.

Gemäß einer bevorzugten Ausführungsform der vorliegenden Erfindung sind die zusätzlichen Metalloxide ausgewählt aus der Gruppe bestehend aus CoO, GeO₂, CuO, NiO₂, PtO₂, Na₂O, In₂O₃, Li₂O, WO₃, Ag₂O, ZnO, RuO, NiO, Fe₂O₃, RuO₂, Ga₂O₃, PtO, Nb₂O₅, MnO₂, In₂O₃, PdO, K₂O, SnO₂, TiO₂, Cr₂O₃, HfO, ZrO₂, VO₂, CeO₂, Y₂O₃, CaO, MoO₂, SiO₂, La₂O₃, MgO, Sc₂O₃, SrO, Al₂O₃ und Kombinationen davon.

Gemäß einer besonders bevorzugten Ausführungsform der vorliegenden Erfindung weist der Reaktorraum mindestens zwei voneinander getrennte und gasleitend miteinander verbundene Bereiche auf, von denen mindestens ein Bereich die metallhaltige Kontaktmasse und mindestens ein weiterer Bereich mindestens ein inertes Material umfasst.

Gemäß der vorliegenden Erfindung mündet die in den Reaktorraum ragende Abführleitung in den Bereich umfassend das inerte Material.

Der erfindungsgemäße Reaktor weist Zuführleitungen und Abführleitungen auf mit denen Fluide (Gase und Flüssigkeiten wie z.B. Wasser) in den Reaktor eingebracht werden können. Vorzugsweise münden diese Leitungen in einem Bereich umfassend ein inertes Material. D.h. dass die in den Reaktor einbringbaren Fluide nicht unmittelbar mit einem chemisch reaktiven Material in Kontakt gebracht werden.

Die in den Reaktorraum ragende Abführleitung, mit der Fluide wie z.B. der komprimierte Wasserstoff aus dem Reaktor abgeführt werden können, ist vorzugsweise mit einem Wasserdampfabscheider verbunden. Der Wasserdampfabscheider dient dazu im komprimierten Wasserstoff enthaltenes Wasser abzutrennen, um reineren Wasserstoff zu erzeugen.

Im Reaktorraum ist mindestens ein Synthesegasbereich angeordnet, der einen Katalysator und/oder einen nicht-katalytischen Feststoff umfasst. Neben dem mindestens einen Bereich mit metallischer Kontaktmasse im Reaktorraum ist zusätzlich mindestens ein Synthesegasbereich angeordnet. Diese beiden Bereiche sind räumlich voneinander getrennt, jedoch gasleitend miteinander verbunden. Dadurch können die unterschiedlichen chemischen Reaktionen in den jeweiligen Bereichen im Reaktorraum getrennt erfolgen.

Der Katalysator des Synthesegasbereichs ist vorzugsweise ausgewählt aus der Gruppe bestehend aus Metallen, Metalloxiden und Kombinationen davon, insbesondere Nickel, Kobalt, Ruthenium, Platin, Palladium, Gold, Eisen, MgO, Al₂O₃, SiO₂, CuO oder CeO₂.

Der nicht-katalytische Feststoff des Synthesegasbereichs ist vorzugsweise ausgewählt aus der Gruppe bestehend aus Nickeloxid, Eisenoxid, Kupferoxid, Wolframoxid und Kombinationen davon.

Gemäß einer weiteren bevorzugten Ausführungsform der vorliegenden Erfindung ist im Reaktorraum mindestens ein Bereich zur partiellen Oxidation eines kohlenstoffhaltigen Ausgangsmaterials angeordnet, der einen Katalysator für die partielle Oxidation umfasst.

Gemäß einer bevorzugten Ausführungsform der vorliegenden Erfindung ist der Katalysator für die partielle Oxidation ausgewählt aus der Gruppe bestehend aus Metallen, Metalloxiden und Kombinationen davon, insbesondere Nickel, Kobalt, Ruthenium, Platin, Palladium, Gold, Eisen, MgO, Al2O3, SiO2, CuO oder CeO2.

Der Reaktorraum weist vorzugsweise mehrere Bereiche zur partiellen Oxidation in Form von Leitungen auf, wobei die Leitungen durch den Bereich umfassend die metallhaltige Kontaktmasse geführt sind. Bei der partiellen Oxidation wird ein unterstöchiometrisches Brennstoff-Luft-Gemisch teilweise verbrannt und es entsteht ein wasserstoffreiches Synthesegas. Die bei der partiellen Oxidation entstehende Wärme kann zur Erwärmung der metallhaltigen Kontaktmasse verwendet werden. Dadurch kann die Energieeffizienz bei der Wasserstoffherstellung verbessert werden. Besonders bevorzugt ist das Vorsehen von mehr als einer Leitung (z.B. mehr als zwei, mehr als drei, mehr als vier, mehr als fünf, mehr als sechs, mehr als acht, mehr als zehn, mehr als 15, mehr als 20, mehr als 30), in der eine partielle Oxidation durchgeführt werden kann, innerhalb der metallhaltigen Kontaktmasse.

Gemäß einer bevorzugten Ausführungsform der vorliegenden Erfindung ist der Synthesegasbereich oder der Bereich zur partiellen Oxidation von der metallhaltigen Kontaktmasse durch einen gasdurchlässigen inerten Bereich getrennt.

Gemäß einer weiteren bevorzugten Ausführungsform der vorliegenden Erfindung ist eine Öffnung der mindestens einen in den Reaktorraum ragenden Abführleitung im inerten Bereich zwischen dem Synthesegasbereich oder dem Bereich zur partiellen Oxidation und dem Bereich der Kontaktmasse angeordnet.

Durch das Abführen des Wasserstoffs aus dem inerten Bereich ist es möglich Wasserstoff von höherer Reinheit herzustellen als bei der Entnahme des Wasserstoffs direkt aus dem Synthesegasbereich oder dem Bereich zur partiellen Oxidation. Deshalb ist es besonders bevorzugt, wenn die Öffnung oder die Öffnungen der Abführleitung bzw. Abführleitungen im inerten Bereich vorzufinden ist.

Die vorliegende Erfindung wird anhand der folgenden Figuren eingehender dargelegt, ohne jedoch auf diese beschränkt zu sein.

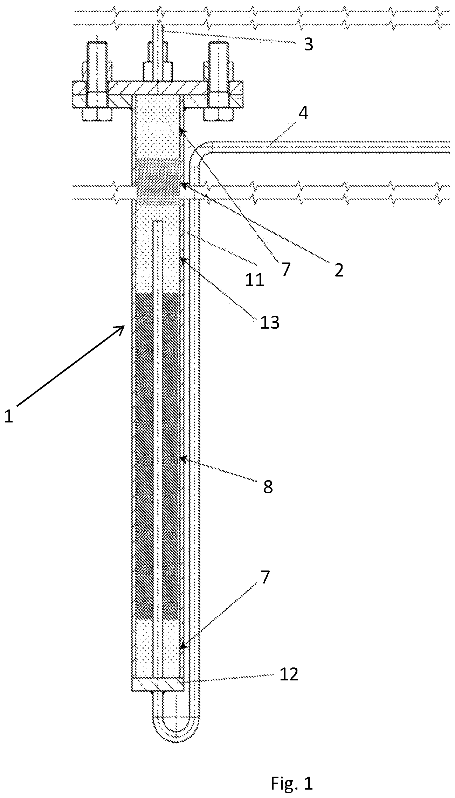

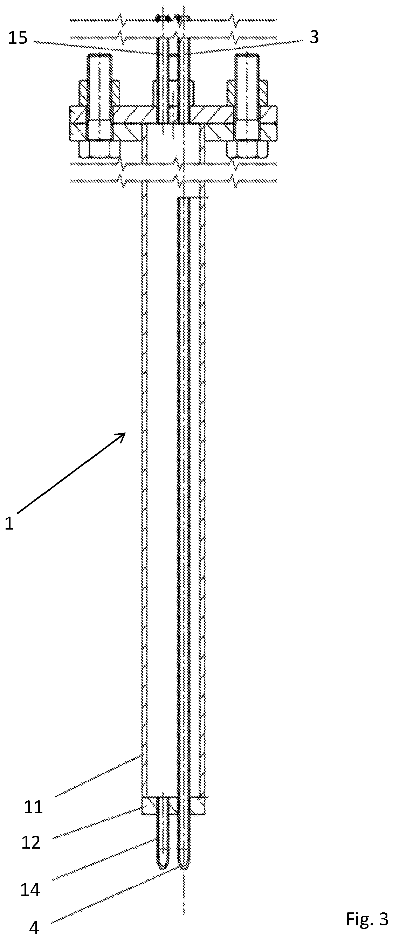

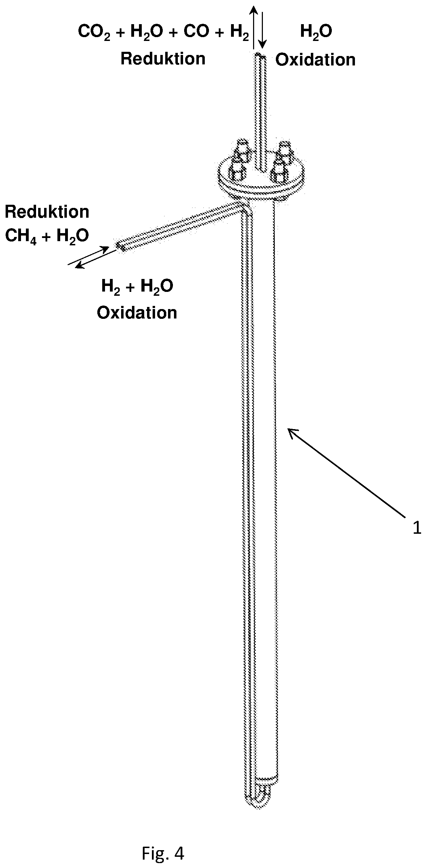

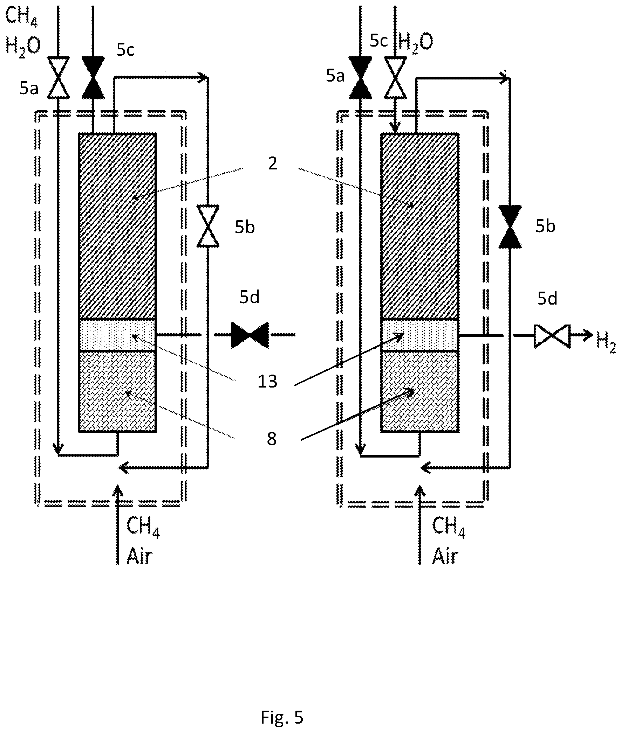

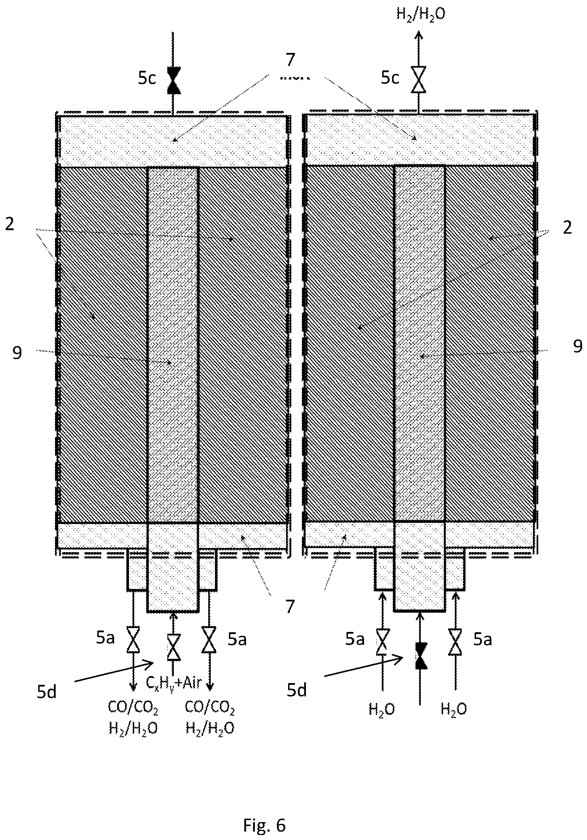

Figuren 1 bis 3 zeigen einen Schnitt durch einen erfindungsgemäßen Reaktor; Figur 4 zeigt eine Außenansicht eines Reaktors; Figuren 5 und 6 zeigen eine schematische Darstellung des erfindungsgemäßen Reaktors und Verfahrens.

Figur 1 zeigt einen erfindungsgemäßen Reaktor 1 in dessen Inneren eine metallhaltige Kontaktmasse 2 angeordnet ist. Die metallhaltige Kontaktmasse 2 umfasst im Wesentlichen ein zwischen einer metallischen Form und einer oxidischen Form reversibel oxidierbares und reduzierbares Material. Der Reaktor 1 weist eine Zuführleitung 3 auf mit der Wasser bzw. Wasserdampf in einen inerten Bereich 7 im Endbereich des Reaktors 1 gebracht werden kann. Die inerten und reaktiven Bereiche des Reaktorraums innerhalb des Reaktorrohres 11 sind gasleitend miteinander verbunden, so dass über die Zuleitung zugeführtes Wasser bzw. zugeführter Wasserdampf zur metallhaltigen Kontaktmasse 2 gelangen kann.

In dem in Figur 1 dargestellten Reaktor ist ein Synthesegasbereich 8 angeordnet. Dieser Bereich dient dazu aus einem vergasbaren kohlenstoffhaltigen Ausgangsmaterial ein Gasgemisch bereitzustellen, das in der Lage ist bei geeigneten Bedingungen (z.B. bei einer Temperatur von 300°C bis 1200°C) in der metallischen Kontaktmasse vorhandenes Metalloxid zumindest teilweise zu Metall zu reduzieren. Das vergasbare kohlenstoffhaltige Ausgangsmaterial kann direkt am Rohrboden 12 des Reaktors in den Reaktorraum (entweder in den Synthesegasbereich oder einem diesem Bereich vorgelagerten inerten Bereich 7) eingebracht werden. Zwischen dem Synthesegasbereich 8 und der metallhaltigen Kontaktmasse 2 (das ist jener Bereich, in dem in Anwesenheit von Metall aus Wasser Wasserstoff gewonnen wird) ist ein inerter Bereich 13 vorgesehen. Dieser zusätzliche inerte Bereich 13 hat den Vorteil, dass etwaige gasförmige Verunreinigungen die im Synthesegasbereich noch von der Reduktion vorhanden sind bzw. während der Oxidation als Nebenprodukte gebildet werden können nicht in den bei der Oxidation produzierten Wasserstoff gelangen. Zusätzlich werden etwaige unerwünschte Verunreinigungen (z.B. fester Kohlenstoff) aus dem Synthesegasbereich 8 bzw. aus der Synthesegasreaktion vor dem Eindringen in die metallhaltige Kontaktmasse 2 abgehalten.

Der im erfindungsgemäßen Reaktor erzeugte komprimierte Wasserstoff wird vorzugsweise über eine Abführleitung 4 aus dem Reaktor entnommen, welche in einen inerten Bereich 13 mündet, der gasleitend mit der metallhaltigen Kontaktmasse 2 in Verbindung steht. Die Entnahme des Wasserstoffs aus dem inerten Bereich 13 ist vorteilhaft, da dadurch ein weniger verunreinigtes Wasserstoff/Wassergemisch gewonnen werden kann.

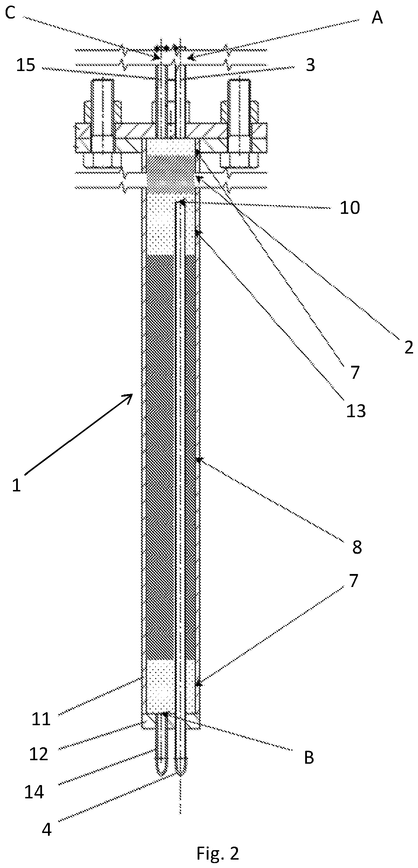

In Fig. 2 ist ein Querschnitt eines erfindungsgemäßen Reaktors 1 dargelegt. Wie eingangs ausgeführt kann das erfindungsgemäße Verfahren einen Oxidationsschritt oder einen Oxidations- und Reduktionsschritt umfassen. Im Oxidationsschritt wird ein Metall, wie z.B. Eisen, oder Metalloxid bei einer bestimmten Temperatur mit Wasser in Kontakt gebracht, wodurch Metalloxid und Wasserstoff produziert wird. Im Reduktionsschritt wird das im Oxidationsschritt gebildete Metalloxid, zu Metall oder einem Metalloxid reduziert, in dem ein vergasbares kohlenstoffhaltiges Ausgangsmaterial (z.B. Methan mit Wasser) eingesetzt wird. Je nach Verfahrensschritt können bei der in Fig. 2 dargestellten Vorrichtung unterschiedliche Leitungen zum Ein- und Ausbringen von Gasen und Gasgemischen in und aus dem Reaktor eingesetzt werden.

Während des Oxidationsschritts kann über die Öffnung A der Zuführleitung 3 Wasser direkt oder indirekt über den inerten Bereich 7 in den Bereich mit der metallhaltigen Kontaktmasse 2 eingebracht werden. Der im Zuge der Oxidation gebildete Wasserstoff bzw. das entstehende Wasserstoff/Wassergemisch wird über Öffnung 10 der Abführleitung 4 aus dem Reaktor entnommen. Um den Druck während der Oxidation innerhalb des Reaktors bzw. Reaktorraums zu steigern sind bis auf Zuführleitung 3 sämtliche weiteren Zuführleitungen und Abführleitungen in und aus dem Reaktor mittels daran befindlichen Vorrichtungen zur Steuerung oder Regelung der Durchflussmenge, vorzugsweise mit einem Ventil, verschlossen. Öffnung 10 der Abführleitung 4 kann zusätzlich mit einem Wasserabscheider verbunden sein, der im komprimierten Wasserstoff befindliches Wasser entfernen kann. Die Zuführleitung 3 ist an ein Fördermittel von wasserhaltigen Medien gekoppelt.

Im Zuge des Reduktionsschrittes wird ein vergasbares kohlenstoffhaltiges Ausgangsmaterial (z.B. Methan mit Wasser) durch Öffnung B einer Zuführleitung 14 über einen inerten Bereich 7 in den Synthesegasbereich 8 eingebracht. Das vergasbare kohlenstoffhaltige Ausgangsmaterial könnte alternativ dazu direkt in den Synthesegasbereich 8 transportiert werden. Eine am Reaktor befindliche Abführleitung 15 führt das bei der Reduktion der metallhaltigen Kontaktmasse 2 entstehende Gasgemisch (umfassend z.B. CO₂, CO, H₂O und H₂) über Öffnung C aus dem Reaktor 1 ab.

Fig. 3 zeigt einen erfindungsgemäßen Reaktor 1 ohne eingefügte Bereiche.

In Fig. 4 ist die Außenansicht eines erfindungsgemäßen Reaktors 1 abgebildet. Beispielhafte Fluide, die während des Oxidationsschrittes bzw. Reduktionsschrittes aus dem Reaktor aus- und eingebracht werden, sind gemeinsam mit den Strömungsrichtungen eingezeichnet.

Fig. 5 zeigt schematisch zwei Abbildungen der erfindungsgemäßen Reaktoren und die Positionen (offen - weiß, geschlossen - schwarz) der an den Zuführ- und Abführleitungen angebrachten Vorrichtungen zur Steuerung oder Steuerung der Durchflussmenge, vorzugsweise der Ventile (5a, 5b, 5c, 5d). Während der Reduktionsreaktion ist das Ventil an der Zuführleitung zum Einbringen des vergasbaren kohlenstoffhaltigen Ausgangsmaterials (5a) (z.B. Methan/Wasser) geöffnet. Dabei strömt das vergasbare kohlenstoffhaltige Ausgangsmaterial durch den Synthesegasbereich 8, den inerten Bereich 13 und die metallhaltige Kontaktmasse 2 des Reaktors, wobei das bei geöffneten Ventil 5b aus dem Reaktor austretende Gasgemisch dazu verwendet werden kann, um das einzubringende vergasbare kohlenstoffhaltigen Ausgangsmaterials zu erwärmen und den gesamten Prozess zu beheizen.

Während der Oxidationsreaktion werden - um den Druck innerhalb des Reaktors zu erhöhen - bis auf das Ventil 5c an der Einführleitung für Wasser in den Reaktor sämtliche Öffnungen verschlossen. Ventil 5d wird nach Erreichen eines vordefinierten Drucks innerhalb des Reaktors entsprechend geöffnet, um komprimierten Wasserstoff aus dem Reaktor zu entnehmen.

Figur 6 zeigt eine alternative Ausgestaltung des erfindungsgemäßen Reaktors 1 bei dem der Bereich der partiellen Oxidation 9 in den Bereich der metallhaltigen Kontaktmasse 2 integriert ist. Der Bereich der partiellen Oxidation 9 befindet sich in einem Rohr bzw. einer Leitung, welche sich innerhalb des Bereichs der metallhaltigen Kontaktmasse 2 befindet. Konstruktiv könnte im einfachsten Fall Leitung 14 aus Figur 2 bis kurz vor Reaktorende verlängert werden, und mit einem Feststoff befüllt werden. Diese Anordnung ist speziell dann sinnvoll, wenn die Erzeugung des Synthesegases über eine exotherme Reaktion stattfindet (z.B. katalytische partielle Oxidation).

CₓH_{y} + x/2O₂ → xCO + y/2H₂ (partielle Oxidation)

In diesem Fall wird die Wärme, die bei der Synthesegaserzeugung entsteht, verwendet, um die endotherme Reduktion mit Energie zu versorgen. Abgas der Reduktion kann zusätzlich zur Gewinnung von Prozesswärme verwendet werden. Die Leitung mit Ventil 5b in Figur 5 ist in diesem Fall optional, kann aber bei Bedarf für Regenerationsreaktionen bzw. Luftoxidationen verwendet werden.

Eine Vorrichtung gemäß Fig. 6 kann ebenfalls inerte Bereiche (7) aufweisen.

Das erfindungsgemäße Verfahren, das vorzugsweise mit der erfindungsgemäßen Vorrichtung durchgeführt wird, umfasst zumindest einen Oxidationsschritt bei dem Wasser mit Metall zu Wasserstoff und Metalloxid umgesetzt wird. Um das Metalloxid zumindest teilweise zu Metall zu reduzieren und somit die metallhaltige Kontaktmasse für den nächsten Oxidationszyklus zu regenerieren, wird die Kontaktmasse zumindest teilweise reduziert wie im Folgenden allgemeinem Beispiel dargelegt.

### Reduktion:

Ein Kohlenwasserstoff (z.B. Methan) wird mit Dampf gemischt und anschließend über einen Bereich umfassend inertes Material in den Reaktor geleitet, in dem das Gasgemisch auf Reaktionstemperatur gebracht wird. Danach erreicht das Gemisch den Synthesegasbereich. In diesem Bereich befindet sich entweder ein Katalysator, oder ein nicht katalytischer Feststoff (Metalloxid M_{w}O_{z}, wobei M für Metall steht und w und z ganze Zahlen sind) zur Herstellung von Synthesegas. Bei Verwendung eines Katalysators findet folgende allgemeine Reaktion (1) statt (x und y sind ganze Zahlen).

CₓH_{y} + xH₂O → xCO + (x+y/2)H₂ (1)

Bei der Verwendung eines nicht katalytischen Feststoffes kann über Reaktion (2) Synthesegas erzeugt werden

CₓH_{y} + MO → xCO + y/2 H₂ +M (2)

In beiden Fällen kann es zur Bildung von festem Kohlenstoff (Cₛ) über Nebenreaktionen kommen (3 und 4).

CₓH_{y} → xCₛ + y/2H₂ (3)

2CO → Cₛ + CO₂ (4)

Andere Verunreinigungen wie z.B. Schwefelverbindungen werden ebenfalls hier oder wenn nötig bereits im Inertbereich oder außerhalb des Reaktors abgefangen. In diesem Fall hat der erste Inertbereich die Funktion eines Filters oder Absorbers/Adsorbers.

Das Synthesegas wird über den zweiten Inertbereich geleitet. Bei Bedarf kann auch hier zusätzlich Filter- oder Absorber-/Adsorbermaterial verwendet werden. Anschließend erreicht das Synthesegas die metallhaltige Kontaktmasse. Dort findet die Reduktion des Metalloxides (hier beispielhaft Eisenoxides) statt (5 und 6).

Fe₃O₄ + H₂/CO → 3FeO + H₂O/CO₂ (5)

3FeO + 3H₂/CO → 3Fe + 3H₂O/CO₂ (6)

### Oxidation:

Wasser wird im Gegenstrom in den Reaktor geleitet und verdampft dort. Der Dampf reagiert mit Eisen und produziert Wasserstoff (7 und 8).

3Fe + 3H₂O → 3FeO + 3H₂ (7)

3FeO + H₂O → Fe₃O₄ + H₂ (8)

Abgeleitet wird der Wasserstoff durch eine zweite Leitung (z.B. Rohr), welche in einem Inertbereich zwischen der metallhaltigen Kontaktmasse und dem Synthesegasbereich mündet. Dadurch, dass der Wasserstoff über diese Leitung geleitet wird, kann es zu keiner Reaktion mit den Verunreinigungen, welche im Synthesegasbereich vorliegen, kommen und es kommt auch zu keiner Verunreinigung des produzierten Wasserstoffs. Das vorliegende Dampf/Wasserstoffgemisch wird in einen Kondensator geleitet, in dem der Dampf auskondensiert. Durch Schließen bzw. Begrenzen des Gasstroms am Kondensatorausgang kann ein beliebiger Wasserstoffdruck eingestellt werden.

### Regeneration:

Durch Reaktion mit Wassersdampf oder einem kleinen Anteil des produzierten Wasserstoffs können Verunreinigungen des Synthesegasbereichs entfernt werden, wodurch dieser Bereich regeneriert wird. Zusätzlich kann bei Bedarf anschließend mit Luft oxidiert werden, um Verunreinigungen zu entfernen, oder wieder Metalloxid zu bilden das im nächsten Zyklus wieder über Reaktion 2 reagiert.

Die Möglichkeit diesen Schritt durchzuführen ist ein Vorteil des Reaktordesigns, ein Regenerationsschritt ist allerdings nicht in jedem Fall zwingend erforderlich.

Bei einer Luft-Oxidation kommt es außerdem zur weiteren Oxidation der Kontaktmasse:

2Fe₃O₄ + 1/2O₂ → 3Fe₂O₃ (9; nach Reaktion 8)

Dann beginnt der nächste Reduktionszyklus mit:

3Fe₂O₃ + H₂/CO → 2F₃O₄ + H₂O/CO₂ (10; vor Reaktion 5)

## Patentansprüche

1. Vorrichtung zum Herstellen von komprimiertem Wasserstoff umfassend einen druckstabilen Reaktor (1) mit einem Reaktorraum, der eine metallhaltige Kontaktmasse (2) aufweist, wobei der Reaktor (1) mindestens eine Zuführleitung (3) zum Zuführen von Fluiden in den Reaktorraum und mindestens eine Abführleitung (4) zum Abführen von Fluiden aus dem Reaktorraum umfasst, wobei die mindestens eine Abführleitung mit einer Vorrichtung (5a, 5b, 5c, 5d) zur Steuerung oder Regelung der Durchflussmenge, vorzugsweise mit einem Ventil, zur Einstellung des Drucks innerhalb des Reaktorraums versehen ist, wobei an mindestens einer Zuführleitung ein Fördermittel zum Einbringen eines wasserhaltigen Mediums in einen Reaktorraum vorgesehen ist und wobei mindestens eine Abführleitung (4) in den Reaktorraum ragt, über die komprimierter Wasserstoff aus dem Reaktorraum abgeführt wird, wobei der Reaktorraum mindestens zwei voneinander getrennte und gasleitend miteinander verbundene Bereiche aufweist, von denen mindestens ein Bereich die metallhaltige Kontaktmasse (2) und mindestens ein weiterer Bereich mindestens ein inertes Material (7, 13) umfasst, wobei die in den Reaktorraum ragende Abführleitung (4) in den Bereich umfassend das inerte Material (13) mündet, und wobei im Reaktorraum mindestens ein Synthesegasbereich (8) angeordnet ist, der einen Katalysator und/oder einen nicht katalytischen Feststoff umfasst.

2. Vorrichtung nach Anspruch 1, **dadurch gekennzeichnet, dass** die metallhaltige Kontaktmasse (2) die Form eines Metallschwamms, Pellets, Pulvers, Granulats oder eine Kombination davon aufweist.

3. Vorrichtung nach Anspruch 1 oder 2, **dadurch gekennzeichnet, dass** die metallhaltige Kontaktmasse (2) ein Metall und/oder Metalloxid ausgewählt aus der Gruppe bestehend aus Eisen, Eisenoxid, Molybdän, Molybdänoxid, Wolfram, Wolframoxid, Germanium, Germaniumoxid und Kombinationen davon umfasst.

4. Vorrichtung nach einem der Ansprüche 1 bis 3, **dadurch gekennzeichnet, dass** die Kontaktmasse (2) zusätzliche Metalloxide umfasst, um die Stabilität und Reaktivität der Kontaktmasse zu erhöhen.

5. Vorrichtung nach Anspruch 1, **dadurch gekennzeichnet, dass** der Katalysator ausgewählt ist aus der Gruppe bestehend aus Metallen, Metalloxiden und Kombinationen davon, insbesondere Nickel, Kobalt, Ruthenium, Platin, Palladium, Gold, Eisen, MgO, Al₂O₃, SiO₂, CuO oder CeO₂.

6. Vorrichtung nach Anspruch 1 oder 5, **dadurch gekennzeichnet, dass** der nicht-katalytische Feststoff ausgewählt ist aus der Gruppe bestehend aus Nickeloxid, Eisenoxid, Kupferoxid, Wolframoxid und Kombinationen davon.

7. Vorrichtung nach einem der Ansprüche 1 bis 6, **dadurch gekennzeichnet, dass** im Reaktorraum mindestens ein Bereich (9) zur partiellen Oxidation eines kohlenstoffhaltigen Ausgangsmaterials angeordnet ist, der einen Katalysator für die partielle Oxidation umfasst.

8. Vorrichtung nach Anspruch 7, **dadurch gekennzeichnet, dass** der Katalysator für die partielle Oxidation ausgewählt ist aus der Gruppe bestehend aus Metallen, Metalloxiden und Kombinationen davon, insbesondere Nickel, Kobalt, Ruthenium, Platin, Palladium, Gold, Eisen, MgO, Al₂O₃, SiO₂, CuO oder CeO₂.

9. Vorrichtung nach Anspruch 7 oder 8, **dadurch gekennzeichnet, dass** der Reaktorraum einen oder mehrere Bereiche (9) zur partiellen Oxidation in Form von Leitungen aufweist, wobei die Leitungen durch den Bereich umfassend die metallhaltige Kontaktmasse (2) geführt sind.

10. Vorrichtung nach einem der Ansprüche 1 bis 9, **dadurch gekennzeichnet, dass** der Synthesegasbereich (8) oder der Bereich (9) zur partiellen Oxidation von der metallhaltigen Kontaktmasse (2) durch einen gasdurchlässigen inerten Bereich (7, 13) getrennt ist.

11. Vorrichtung nach Anspruch 10, **dadurch gekennzeichnet, dass** eine Öffnung (10) der mindestens einen in den Reaktorraum ragenden Abführleitung (4) im inerten Bereich (7, 13) zwischen dem Synthesegasbereich (8) oder dem Bereich (9) zur partiellen Oxidation und dem Bereich der Kontaktmasse (2) angeordnet ist.

12. Verfahren zum Herstellen von komprimiertem Wasserstoff in einer Vorrichtung gemäß einem der Ansprüche 1 bis 11 umfassend einen Schritt des Einbringens eines wasserhaltigen Mediums in einen Reaktorraum eines druckstabilen Reaktors einer Vorrichtung gemäß einem der Ansprüche 1 bis 11 mittels eines Fördermittels, vorzugsweise einer Pumpe, wobei vor oder im Reaktorraum das wasserhaltige Medium verdampft wird, wodurch der Druck innerhalb des Reaktorraumes über den Umgebungsdruck steigt, und das verdampfte Wasser mit dem Metall der Kontaktmasse zu Wasserstoff und das Metall zu Metalloxid umgesetzt wird, wobei der komprimierte Wasserstoff über eine in den Reaktorraum ragende Leitung aus dem Reaktorraum abgeführt wird, wobei der Druck innerhalb des Reaktorraums mit einer an der Abführleitung vorgesehenen Vorrichtung zur Steuerung oder Regelung der Durchflussmenge, vorzugsweise mit einem Ventil, gesteuert oder geregelt wird, wobei die in den Reaktorraum ragende Leitung in den Bereich umfassend das inerte Material ragt und der komprimierte Wasserstoff über den Bereich umfassend das inerte Material aus dem Reaktorraum abgeführt wird, und wobei das Verfahren umfassend einen vom ersten Schritt der Umsetzung von verdampften Wasser mit dem Metall der Kontaktmasse zu Wasserstoff und des Metalls zu Metalloxid unabhängigen zweiten Schritt, in dem das Metalloxid der metallhaltigen Kontaktmasse aus dem ersten Schritt mit einem Gasgemisch umfassend Kohlenmonoxid und/oder Wasserstoff und/oder Methan und/oder langkettigen Kohlenwasserstoffe zu Metall reduziert wird.

## Claims

1. A device for producing compressed hydrogen, comprising a pressure-resistant reactor (1) with a reactor chamber having a metal-containing contact mass (2), wherein the reactor (1) comprises at least one feed line (3) for feeding fluids into the reactor chamber and at least one discharge line (4) for discharging fluids from the reactor chamber, wherein the at least one discharge line is provided with a device (5a, 5b, 5c, 5d) for controlling or regulating the flow rate, preferably having a valve, for adjusting the pressure within the reactor chamber, wherein a conveyance means is provided on the at least one feed line for introducing a water-containing medium into a reactor chamber, and wherein at least one discharge line (4) protrudes into the reactor chamber, through which compressed hydrogen is discharged from the reactor chamber, wherein the reactor chamber has at least two areas that are separate from each other and are connected to each other in a gas-conducting manner, of which at least one area comprises the metal-containing contact mass (2) and at least one additional area comprises at least one inert material (7, 13), wherein the discharge line (4), which protrudes into the reactor chamber, ends up in the area comprising the inert material (13), and wherein in the reactor chamber at least one synthesis gas area is provided comprising a catalyst and/or a non-catalytic solid.

2. The device according to claim 1, **characterised in that** the metal-containing contact mass (2) has the form of a metal sponge, pellet, powder, granulate, or a combination thereof.

3. The device according to claim 1 or 2, **characterised in that** the metal-containing contact mass (2) comprises a metal and/or metal oxide selected from the group consisting of iron, iron oxide, molybdenum, molybdenum oxide, tungsten, tungsten oxide, germanium, germanium oxide, and combinations thereof.

4. The device according to any one of claims 1 to 3, **characterised in that** the contact mass (2) comprises additional metal oxides in order to increase the stability and reactivity of the contact mass.

5. The device according to claim 1, **characterised in that** the catalyst is selected from the group consisting of metals, metal oxides, and combinations thereof, in particular nickel, cobalt, ruthenium, platinum, palladium, gold, iron, MgO, Al₂O₃, SiO₂, CuO, or CeO₂.

6. The device according to claim 1 or 5, **characterised in that** the non-catalytic solid is selected from the group consisting of nickel oxide, iron oxide, copper oxide, tungsten oxide, and combinations thereof.

7. The device according to any one of claims 1 to 6, **characterised in that** at least one area (9) for partial oxidation of a carbon-containing starting material is arranged in the reactor chamber and comprises a catalyst for the partial oxidation.

8. The device according to claim 7, **characterised in that** the catalyst for the partial oxidation is selected from the group consisting of metals, metal oxides, and combinations thereof, in particular nickel, cobalt, ruthenium, platinum, palladium, gold, iron, MgO, Al₂O₃, SiO₂, CuO, or CeO₂.

9. The device according to claim 7 or 8, **characterised in that** the reactor chamber has one or more areas (9) for partial oxidation in the form of lines, wherein the lines are guided through the area comprising the metal-containing contact mass (2).

10. The device according to any one of claims 1 to 9, **characterised in that** the synthesis gas area (8) or the area (9) for partial oxidation is separated from the metal-containing contact mass (2) by a gas-permeable inert area (7, 13).

11. The device according to claim 10, **characterised in that** an opening (10) of the at least one discharge line (4) protruding into the reactor chamber is arranged in the inert area (7, 13) between the synthesis gas area (8) or the area (9) for partial oxidation and the area of the contact mass (2).

12. A method for producing compressed hydrogen in a device according to any one of claims 1 to 11, said method comprising a step of introducing a water-containing medium into a reactor chamber of a pressure-resistant reactor of a device according to any one of claims 1 to 11 by means of a conveyance means, preferably a pump, wherein the water-containing medium is evaporated before or in the reactor chamber, whereby the pressure within the reactor chamber rises above the ambient pressure, and the evaporated water is reacted with the metal of the contact mass to form hydrogen, and the metal is reacted to form metal oxide, wherein the compressed hydrogen is discharged from the reactor chamber by means of a line protruding into the reactor chamber, wherein the pressure within the reactor chamber is controlled or regulated using a device, provided on the discharge line, for controlling or regulating the flow rate, preferably using a valve, wherein the line protruding into the reactor chamber protrudes into the area comprising the inert material, and the compressed hydrogen is discharged from the reactor chamber via the area comprising the inert material, and wherein the method further comprises a second step, which is independent of the first step of reacting evaporated water with the metal of the contact mass to form hydrogen and of reacting the metal to form metal oxide, in which the metal oxide of the metal-containing contact mass from the first step is reduced to metal with a gas mixture comprising carbon monoxide and/or hydrogen and/or methane and/or long-chain hydrocarbons.

## Revendications

1. Dispositif pour la production d'hydrogène comprimé, comprenant un réacteur (1) stable à la pression avec une chambre de réacteur qui présente une masse de contact (2) contenant un métal, dans lequel le réacteur (1) comprend au moins une conduite d'amenée (3) pour l'amenée de fluides dans la chambre de réacteur et au moins une conduite d'évacuation (4) pour l'évacuation de fluides de la chambre de réacteur, dans lequel ladite au moins une conduite d'évacuation est pourvue d'un dispositif (5a, 5b, 5c, 5d) pour la commande ou la régulation du débit, de préférence avec une vanne, pour le réglage de la pression à l'intérieur de la chambre de réacteur, dans lequel un moyen de transport pour l'introduction d'un milieu contenant de l'eau dans une chambre de réacteur est prévu sur au moins une conduite d'amenée et dans lequel au moins une conduite d'évacuation (4) pénètre dans la chambre de réacteur, par laquelle de l'hydrogène comprimé est évacué de la chambre de réacteur, dans lequel la chambre de réacteur présente au moins deux zones séparées l'une de l'autre et reliées entre elles de manière conductrice de gaz, dont au moins une zone comprend la masse de contact (2) contenant un métal et au moins une autre zone comprend au moins un matériau inerte (7, 13), dans lequel la conduite d'évacuation (4) pénétrant dans la chambre de réacteur débouche dans la zone comprenant le matériau inerte (13) et dans lequel au moins une zone de gaz de synthèse (8), qui comprend un catalyseur et/ou un solide non catalytique, est disposée dans la chambre de réacteur.

2. Dispositif selon la revendication 1, **caractérisé en ce que** la masse de contact (2) contenant un métal se présente sous la forme d'une éponge métallique, de boulettes, de poudre, de granulés ou d'une combinaison de ceux-ci.

3. Dispositif selon la revendication 1 ou 2, **caractérisé en ce que** la masse de contact (2) contenant un métal comprend un métal et/ou un oxyde métallique choisi dans le groupe constitué par le fer, l'oxyde de fer, le molybdène, l'oxyde de molybdène, le tungstène, l'oxyde de tungstène, le germanium, l'oxyde de germanium et des combinaisons de ceux-ci.

4. Dispositif selon l'une des revendications 1 à 3, **caractérisé en ce que** la masse de contact (2) comprend des oxydes métalliques supplémentaires pour augmenter la stabilité et la réactivité de la masse de contact.

5. Dispositif selon la revendication 1, **caractérisé en ce que** le catalyseur est choisi dans le groupe constitué par les métaux, les oxydes métalliques et des combinaisons de ceux-ci, en particulier le nickel, le cobalt, le ruthénium, le platine, le palladium, l'or, le fer, MgO, Al₂O₃, SiO₂, CuO ou CeO₂.

6. Dispositif selon la revendication 1 ou 5, **caractérisé en ce que** le solide non catalytique est choisi dans le groupe constitué par l'oxyde de nickel, l'oxyde de fer, l'oxyde de cuivre, l'oxyde de tungstène et des combinaisons de ceux-ci.

7. Dispositif selon l'une des revendications 1 à 6, **caractérisé en ce qu'**au moins une zone (9) pour l'oxydation partielle d'une matière première contenant du carbone est disposée dans la chambre de réacteur, laquelle zone comprend un catalyseur pour l'oxydation partielle.

8. Dispositif selon la revendication 7, **caractérisé en ce que** le catalyseur pour l'oxydation partielle est choisi dans le groupe constitué par les métaux, les oxydes métalliques et des combinaisons de ceux-ci, en particulier le nickel, le cobalt, le ruthénium, le platine, le palladium, l'or, le fer, MgO, Al₂O₃, SiO₂, CuO ou CeO₂.

9. Dispositif selon la revendication 7 ou 8, **caractérisé en ce que** la chambre de réacteur présente une ou plusieurs zones (9) pour l'oxydation partielle sous la forme de conduites, les conduites étant guidées à travers la zone comprenant la masse de contact (2) contenant un métal.

10. Dispositif selon l'une des revendications 1 à 9, **caractérisé en ce que** la zone de gaz de synthèse (8) ou la zone (9) pour l'oxydation partielle est séparée de la masse de contact (2) contenant un métal par une zone inerte (7, 13) perméable au gaz.

11. Dispositif selon la revendication 10, **caractérisé en ce qu'**une ouverture (10) de ladite au moins une conduite d'évacuation (4) pénétrant dans la chambre de réacteur est disposée dans la zone inerte (7, 13) entre la zone de gaz de synthèse (8) ou la zone (9) pour l'oxydation partielle et la zone de la masse de contact (2).

12. Procédé pour la production d'hydrogène comprimé dans un dispositif selon l'une des revendications 1 à 11, comprenant une étape consistant à introduire un milieu contenant de l'eau dans une chambre de réacteur d'un réacteur stable à la pression d'un dispositif selon l'une des revendications 1 à 11 à l'aide d'un moyen de transport, de préférence une pompe, dans lequel, avant ou dans la chambre de réacteur, le milieu contenant de l'eau est vaporisé, de sorte que la pression à l'intérieur de la chambre de réacteur s'élève au-dessus de la pression ambiante, et l'eau vaporisée réagit avec le métal de la masse de contact pour former de l'hydrogène et le métal est transformé en oxyde métallique, dans lequel l'hydrogène comprimé est évacué de la chambre de réacteur par une conduite qui pénètre dans la chambre de réacteur, dans lequel la pression à l'intérieur de la chambre de réacteur est commandée ou régulée par un dispositif de commande ou de régulation du débit, de préférence avec une vanne, prévu sur la conduite d'évacuation, dans lequel la conduite pénétrant dans la chambre de réacteur pénètre dans la zone comprenant le matériau inerte et l'hydrogène comprimé est évacué de la chambre de réacteur par la zone comprenant le matériau inerte, et dans lequel le procédé comprend une deuxième étape, indépendante de la première étape, consistant à faire réagir l'eau vaporisée avec le métal de la masse de contact pour former de l'hydrogène et transformer le métal en oxyde métallique, dans laquelle l'oxyde métallique de la masse de contact contenant un métal issu de la première étape est réduit en métal par un mélange gazeux comprenant du monoxyde de carbone et/ou de l'hydrogène et/ou du méthane et/ou des hydrocarbures à longue chaîne.
